# EUROPEAN PATENT APPLICATION

(11) **EP 1 045 241 A2**
(43) Date of publication of application: **18.10.2000**
(21) Application number: 00302817.2
(22) Date of filing: 04.04.2000
(51) Int. Cl.: G01N 5/02, G01N 15/08

(54) **Method of measuring the permeability of a material using thermogravimetric analysis techniques**

(30) Priority: 14.04.1999 US 291492
(71) Applicant: LUCENT TECHNOLOGIES INC., Murray Hill, New Jersey 07974-0636 (US)
(72) Inventor: Bair, Harvey Edward, Chester, NJ 07930 (US); Popielarski, Stephen Reid, Narberth, Pennsylvania 19072 (US); Simoff, Debra Ann, South Plainfield, NJ 07080 (US)
(74) Representative: Johnston, Kenneth Graham

(57) **Abstract**

A method for measuring the permeability of a material (55) using a thermogravimetric analyzer is disclosed. The permeability of the material is measured by sealing a sheet (55) of such material over an opening in a liquid (50)(or solid, or gas) filled receptacle (12). The sealed receptacle is than placed in a thermogravimetric analyzer wherein the weight of such receptacle is monitored as a function of time in a controlled environment.

## Description

### 1. Field of the Invention

The present invention relates generally to permeability measurements, and more particularly, to a method for measuring the permeability of materials using thermogravimetric analysis techniques.

### 2. Description of the Related Art

Some materials (e. g., plastic films, paper) are permeable with respect to gases and/or liquids. The permeability of a material is defined as the time rate of vapor transmission through a unit area of flat material of unit thickness induced by unit vapor pressure difference between two specific surfaces under specified temperature and vapor pressure conditions.

One technique used to measure the permeability of a material is called the controlled transmission method (see American Society for Testing Materials (ASTM) Standard E96-80). A cross-sectional view of a container **1** useful for measuring permeability via the controlled transmission method is shown in FIG. 1A. The container **1** includes sidewalls **2,** a bottom **3,** and a mouth **4.** Container **1** is made of a material which is impermeable to liquids placed therein. For example, a container made of glass is impermeable to liquids such as water and isopropyl alcohol.

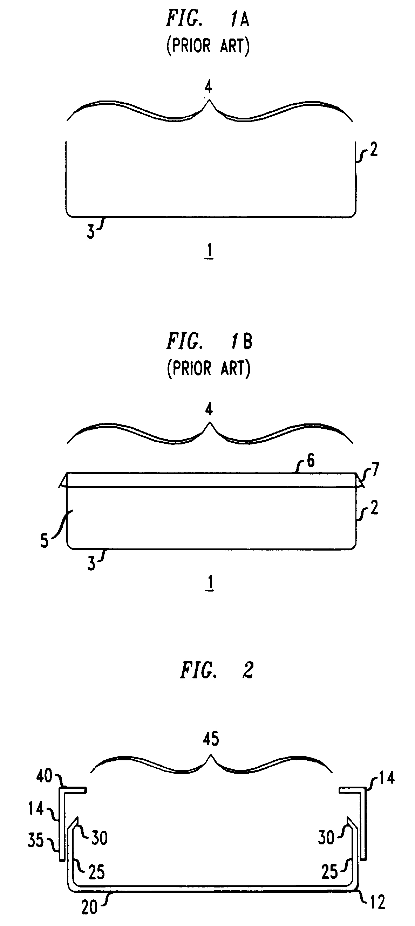

In the controlled transmission method, an amount of a liquid **5** is placed in the container **1,** as shown in FIG. 1B. After the liquid **5** is placed in the container **1,** the mouth **4** thereof is covered with a sheet of material **6,** whose permeability is to be tested. The material sheet **6** is attached to the container with a sealant **7.** Suitable sealants typically include waxes such as beeswax and paraffin. The area of the material sheet **6** covering the mouth **4** of the container **1** defines the area available for vapor transport.

After the material sheet **6** is attached to the container **1** with the sealant **7,** the container **1** is weighed and placed in a controlled environment (not shown) having a specified temperature and a specified vapor pressure. For water vapor permeability measurements, the measurement is made at a controlled humidity. Typically, the specified temperature is within the range of about 21 °C to about 32 °C, while the specified humidity is about 50 %. Thereafter, the weight of the container **1** is measured periodically as a function of time (e. g., once every hour for 28 days). By measuring the weight change of the container as a function of time, one determines the rate per unit area of vapor transmitted through the material sample. Based on the thickness of the material sheet as well as the difference in the vapor pressure inside the container and outside of the container, the permeability of the material sheet is computed.

One problem with the controlled transmission method is related to the time required for determining the rate of vapor transmittance through the material sheet. Typically, for the temperature range of about 21 °C to about 32 °C, long times (on the order of days or weeks) are required for accurately determining the transmittance through the material sheet.

Another problem with the controlled transmission method is related to the amount of liquid placed in the container. Typically, the weight change of the container is measured using a scale which is accurate to about ± 100 mg (milligram). For containers with liquids weighing about 1-10 g (grams), a measurement error of about ± 100 mg is about 10 % of the total weight of the liquid. Consequently, such scales cannot measure the weight changes of a small amount of liquid with an accuracy that provides an acceptable measurement of the permeability.

Since conventional scales cannot measure the weight change of small amounts of liquid with an acceptable accuracy, large containers (having a mouth area greater than about 3000 mm²) that are at least about 90 % filled are typically used. However, large containers require large material sheets (greater than the area of the container mouth) for sealing the mouth of the container. Different regions of a large material sheet potentially have different thicknesses. When different regions of the material sheet have different thicknesses, such regions have different permeation rates, thereby introducing errors into the permeability measurement.

Another potential source of error for the controlled transmission method occurs when the weight change of the container is measured periodically as a function of time. Typically, the weight change of the container, is measured in an environment that is not controlled (e.g., temperature and humidity). Since the weight change of the container is measured in environmental conditions that may be different from the controlled environment, a portion of such weight change is potentially attributable to transmission of the liquid through the material sample when the container is outside of the controlled environment. When the weight change for the container is attributable to environmental conditions outside of the controlled environment, errors in measurement result.

Thus, techniques for measuring the permeability of materials continue to be sought.

### Summary of the Invention

The present invention is directed to a method for measuring the permeability of a material using a thermogravimetric analyzer. The permeability of the material is measured by sealing a sheet thereof over an opening in a liquid (or solid, or gas) containing receptacle. The sealed receptacle is then placed in the thermogravimetric analyzer wherein the weight of such receptacle is monitored as a function of time. Monitoring the weight of the receptacle as a function of time using the thermogravimetric analyzer is desirable because the weight measurements are performed in a controlled environment.

In one embodiment of the present invention, a receptacle and a receptacle lid are provided. The receptacle has a bottom surface and side-walls. The receptacle lid has a top surface and side-walls. The receptacle and the receptacle lid are configured so that the side-walls thereof form a seal when the receptacle lid is placed on the receptacle.

The top surface of the receptacle lid has a hole therein. The hole preferably has an area that is less than about 80 % of the area of the receptacle lid. Holes with areas greater than about 80 % of the area of the receptacle lid are undesirable because such holes potentially interfere with the formation of the seal between the receptacle and the receptacle lid.

The receptacle and the receptacle lid are made of a material which is impermeable to the liquid (or solid, or gas) placed therein. Examples of such receptacle materials include metal or glass. Suitable metals include aluminum and stainless steel.

A sealed receptacle is assembled by filling the receptacle with an amount of a liquid (or solid, or gas). After the receptacle is filled with the liquid (or solid, or gas), a material sheet is placed in the receptacle lid so that it covers the hole therein. The receptacle lid is than compressed onto the receptacle to form the sealed receptacle.

The receptacle is optionally sealed with a deformable material. The deformable material is placed in the receptacle lid on the material sheet along the perimeter of the side-walls of the lid, prior to the lid being compressed on the receptacle. The deformable material preferably has the shape of an o-ring. Examples of suitable deformable materials include rubber, silicone rubber, thermoplastic elastomers, thermosets, and hydrophobic materials such as hydrocarbon waxes and Teflon.

When the receptacle is sealed with the deformable material, it is desirable for the top edges of the receptacle side-walls to be bent towards the center of the receptacle. Bending the top edges of the receptacle side-walls toward the center of the receptacle facilitates the formation of the seal between the receptacle, the deformable material, and the material sheet when the receptacle lid is placed thereon. The top edges of the receptacle side-walls are preferably bent towards the center of the receptacle at an angle of less than about 60 degrees. The bent edges preferably have a length less than about 0.8 mm.

The sealed receptacle is placed in a thermogravimetric analyzer. The thermogravimetric analyzer includes a chamber, and a scale. The chamber is configured to include one or more gas input ports, a gas output port, and a receptacle holder. The receptacle holder is coupled to the scale.

The humidity (or vapor pressure, if a vapor other than water is used) in the chamber is controlled based on the vapor content and flow rates of gases input to the chamber via the one or more gas input ports. For example, a 1:1 mixture of dry nitrogen (relative humidity of about 0 %) and wet nitrogen (relative humidity of about 100 %) provides a chamber relative humidity of about 50%. A heater for controlling chamber temperature is optionally mounted inside the chamber proximate to the receptacle holder or on an outer surface of the chamber.

After the sealed receptacle is placed on the receptacle holder, the weight of the liquid (or solid, or gas) in the receptacle is determined. Thereafter, the weight change for the sealed receptacle is measured as a function of time.

Other objects and features of the present invention will become apparent from the following detailed description considered in conjunction with the accompanying drawings. It is to be understood, however, that the drawings are designed solely for purposes of illustration and do not serve to limit the invention, for which reference should be made to the appended claims.

### Brief Description of the Drawings

FIG. 1A is a cross-sectional view of a container useful for measuring permeability via the controlled transmission method;
FIG. 1B is a cross-sectional view of the container of FIG. 1A with a material sheet covering the mouth thereof;
FIG. 2 is a cross-sectional view of a receptacle and a receptacle lid useful for measuring the permeability of a material sheet in a thermogravimetric analyzer,
FIG. 3 is a cross-sectional view of the container of FIG. 2 within which is sealed an amount of a liquid;
FIG. 4 is a cross-sectional view of a thermal analyzer suitable for measuring the permeability of the material sheet;
FIG. 5 is a graph of the weight % of the water in the sealed receptacle of Example 1 plotted as a function of time;
FIG. 6 is a graph of the weight % of the water in the scaled receptacle of Example 2 plotted as a function of time;
FIG. 7 is a graph of the weight % of the water in the sealed receptacle of Example 3 plotted as a function of time; and
FIG. 8 is a graph of the weight % of the water in the sealed receptacle of Example 4 plotted as a function of time.

### Detailed Description

The present invention is directed to a method for measuring the permeability of a material using a thermogravimetric analyzer. The permeability of the material is measured by sealing a sheet thereof over an opening in a liquid (or solid, or gas) containing receptacle. The sealed receptacle is then placed in the thermogravimetric analyzer wherein the weight of such receptacle is monitored as a function of time. Monitoring the weight of the receptacle as a function of time using the thermogravimetric analyzer is desirable because the weight measurements are performed in a controlled environment.

Also, many thermogravimetric analyzers measure weights with accuracies of about ± 1 µg. Such an accuracy permits the determination of permeation rates with time ranges on the order of minutes to hours rather than days to weeks.

Determining the permeability of a material sheet using a thermogravimetric analyzer is also amenable to the use of material sheets with small areas (less than about 1000 mm²), for which the thickness variation across the sheet area is less than that of a larger area (greater than about 3000 mm²) material sheet. Small area material sheets are also desirable when the material to be tested is only available in limited quantity or where measurements are to be performed in environments with small geometries.

In one embodiment of the present invention, a receptacle **12** and a receptacle lid **14** are provided, as shown in FIG. 2. The receptacle **12** has a bottom surface **20** and side-walls **25.** The receptacle lid **14** has a top surface **40** and side-walls **35.** The receptacle **12** and the receptacle lid **14** are configured so that the side-walls **25,35** thereof form a seal when the receptacle lid **14** is placed on the receptacle **12.**

The top surface **40** of the receptacle lid **14** preferably has an area less than about 1000 mm². Such a top surface area is suitable for use with a thermogravimetric analyzer.

The top surface **40** of the receptacle lid **14** has a hole **45** therein. The hole **45** has an area that is less than about 80 % of the area of the receptacle lid **14.** Holes **45** with areas greater than about 80 % of the area of the receptacle lid **14** are undesirable because such holes **45** potentially interfere with the formation of the seal between the receptacle **12** and the receptacle lid **14.**

The receptacle **12** and the receptacle lid **14** are each made of a material which is impermeable to the liquids (or solids, or gases) placed therein. Examples of suitable materials include metals such as aluminum and stainless steel, or glass. Receptacles and receptacle lids (without holes) are available from Perkin-Elmer Company, Norwalk, Connecticut.

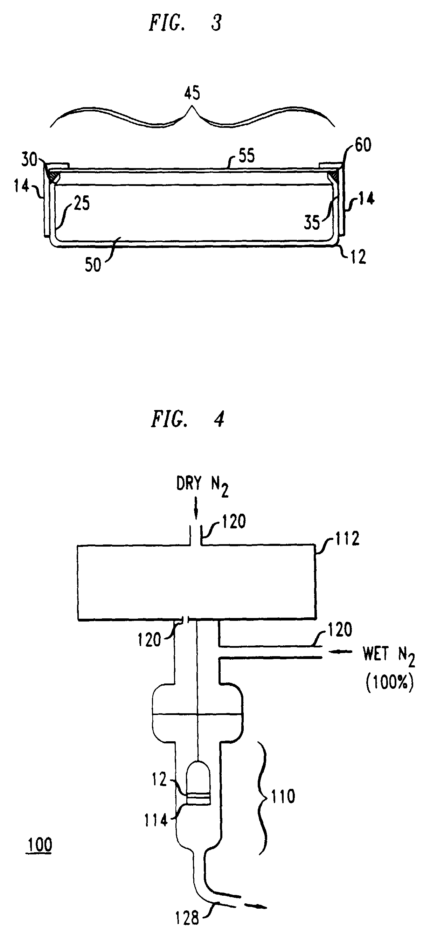

A scaled receptacle is assembled by filling the receptacle **12** with an amount of a liquid **50** (or solid, or gas), as shown in FIG. 3. Thereafter, a material sheet **55,** whose permeability is to be determined, is placed in the receptacle lid **14** so that it covers the hole **45** therein. The receptacle lid **14** is than compressed onto the receptacle **12** to form the scaled receptacle **12.**

The receptacle is optionally sealed with a deformable material **60.** The deformable material **60** is placed in the receptacle lid **14** on the material sheet **55** along the perimeter of the side-walls **35** of the lid, before the receptacle lid **14** is compressed on the receptacle **12.** The deformable material preferably is an o-ring. Examples of suitable deformable materials include rubber, silicone rubber, thermoplastic elastomers, thermosets, and hydrophobic materials such as hydrocarbon waxes and Teflon.

When the receptacle **12** is sealed with the deformable material **60,** it is desirable for the top edges **30** of the receptacle side-walls **25** to be bent towards the center of the receptacle **12.** Bending the top edges **30** of the receptacle side-walls **25** toward the center of the receptacle **12** facilitates the formation of the seal between the receptacle **12,** the deformable material **60,** and the material sheet **55** when the receptacle lid **14** is placed thereon.

The top edges **30** of the receptacle side-walls **25** are preferably bent towards the center of the receptacle **12** at an angle of less than about 60 degrees. The bent edges **30** preferably have a length less than about 0.8 mm.

The sealed receptacle is placed in a thermogravimetric analyzer. A suitable thermogravimetric analyzer **100** is shown in FIG. 4. The thermogravimetric analyzer **100** includes, a chamber **110** and a scale **112.** The chamber **110** is configured to include one or more gas input ports **120,** a gas output port **128,** and a receptacle holder **114.** The receptacle holder **114** is coupled to the scale **112.** The scale **112** preferably has an accuracy of about ± 1 µg (microgram).

The humidity (or vapor pressure, if a vapor other than water is used) in the chamber **110** is controlled based on the vapor content and flow rates of gases input thereto via the one or more gas input ports **120.** For example, a 1:1 mixture of dry nitrogen (relative humidity of about 0 %) and wet nitrogen (relative humidity of about 100 %) provides a chamber relative humidity of about 50 %.

The temperature in the chamber **110** is controlled with a heater (not shown). The heater is optionally mounted inside the chamber proximate to the receptacle holder or on an outer surface of the chamber.

Suitable thermal analyzers include the Thermogravimetric Analyzer TGA-7 (commercially available from Perkin-Elmer Company), TGA 2950 (commercially available from Thermal Analysis Instruments Inc.), and TG/DTA 200 (commercially available from Seiko Corp.).

After the scaled receptacle **12** is placed in the chamber **110** of the thermal analyzer **100,** the weight of the liquid (or solid, or gas) in the receptacle is determined. Thereafter, the weight change for the sealed receptacle is measured as a function of time at a specified temperature and a specified vapor pressure.

Typically, when the value for the vapor pressure is higher in the sealed receptacle **12** than in the chamber, the weight of the receptacle decreases over time as any vapor therein is transmitted out of the receptacle into the chamber **110** of the thermogravimetric analyzer **100** through the material sheet **55** (referring to FIG. 3). Conversely, when the value for the vapor pressure is higher in the chamber **110** of the thermogravimetric analyzer **100** than in the sealed receptacle, the weight of the receptacle increases over time as vapor in the chamber **110** is transmitted into the receptacle through material sheet **55.**

The permeability (P) is calculated as 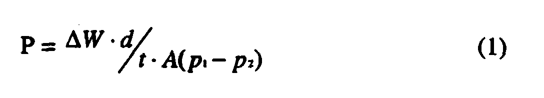 where *ΔW* is the weight change for the sealed receptacle, *d* is the thickness of the material sheet, *t* is the time, *A* is the area of the hole in the receptacle lid, *p*_{*1*} is the vapor pressure in the sealed receptacle, and *p*_{*2*} is the vapor pressure in the chamber.

The following examples are provided to illustrate specific embodiments of the present invention.

### Example 1

Several drops of water were placed in a circular stainless steel receptacle. The stainless steel receptacle had a height of about 2.5 mm and a diameter of about 5.5 mm. A 0.12 mm thick laminate of ZINTEX (0.45 µm pores on a woven nylon support) was placed over an opening in a stainless steel receptacle lid. The stainless steel receptacle lid had a height of about 2.3 mm and a diameter of about 5.6 mm. The opening in the stainless steel receptacle lid had a diameter of about 4.25 mm. The stainless steel receptacle and the stainless steel receptacle lid (without a hole) were obtained from Perkin-Elmer Company, Norwalk, Connecticut. The ZINTEX was obtained from W. R. Gore & Associates, Inc., Elkton, Maryland.

A neoprene o-ring was placed on the ZINTEX laminate in the stainless steel receptacle lid. The neoprene o-ring was about 0.6 mm thick. The neoprene o-ring was obtained from Perkin-Elmer Company.

The stainless steel receptacle lid was compressed onto the stainless steel receptacle using a Quick Press compression tool, commercially available from Perkin-Elmer Company.

The sealed receptacle was placed in a Perkin-Elmer TGA-7 thermogravimetric analyzer. The Perkin-Elmer TGA-7 was fitted with a Perkin-Elmer high temperature external furnace.

The water in the sealed receptacle weighed about 61.043 mg. The humidity in the sealed receptacle was about 100 %.

The weight of the water in the sealed receptacle was continuously measured at a chamber temperature of about 22 °C and a chamber humidity of about 4 % for about 80 minutes. Thereafter, the weight of the water in the sealed receptacle was measured when the temperature and humidity in the chamber were increased to about 50 °C and about 35 %, respectively, for about 28 minutes.

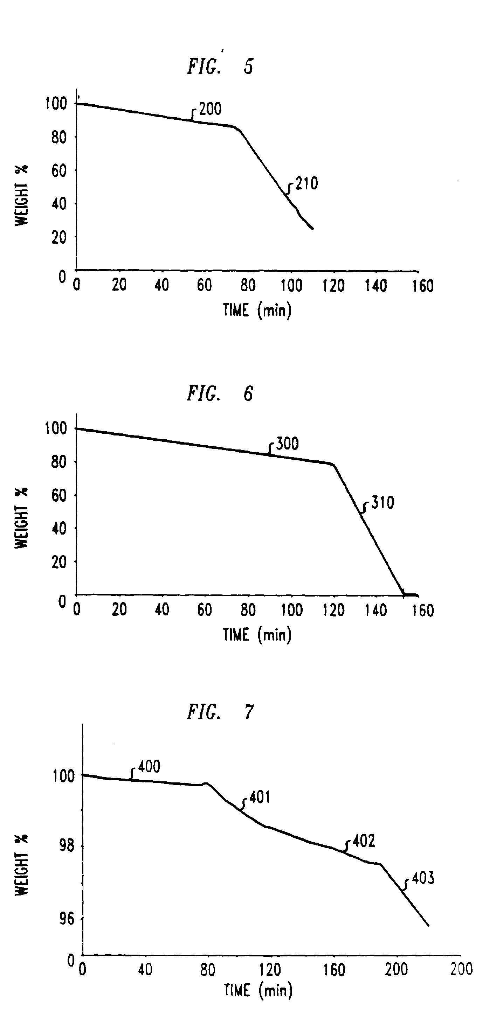

FIG. 5 is a graph of the weight % of the water in the sealed receptacle plotted as a function of time. The weight change for the water in the sealed receptacle measured at a chamber temperature of about 22 °C and humidity of about 4 % is denoted as **200.** The weight change for the water in the sealed receptacle measured at a chamber temperature of about 50 °C and humidity of about 35 % is denoted as **210.** FIG. 5 illustrates that at a chamber temperature of about 22 °C and humidity of about 4 %, the weight of the water in the receptacle decreased by about 0.18 % per minute. However, when the temperature and humidity were increased to about 50 °C and about 35 %, respectively, the weight of the water in the receptacle decreased by about 1.7 % per minute.

### Example 2

Several drops of water were placed in a stainless steel receptacle. A 15 µm thick film of SympaTex was placed over a 4.25 mm diameter opening in a stainless steel receptacle lid. The stainless steel receptacle and the stainless steel receptacle lid (without a hole) were obtained from Perkin-Elmer Company and had the dimensions described in Example 1. The SympaTex was obtained from Akzo Nobel Nonwovens Inc., Hampton, New Hampshire.

A neoprene o-ring was placed on the SympaTex film in the receptacle lid. The neoprene o-ring was obtained from Perkin-Elmer Company and had the dimensions described in Example 1. The stainless steel receptacle lid was compressed onto the stainless steel receptacle as described in Example 1.

The sealed receptacle was placed in the Perkin-Elmer TGA-7 described in Example 1. The water in the sealed receptacle weighed about 54.247 mg. The humidity in the sealed receptacle was about 100 %.

The weight of the water in the sealed receptacle was continuously measured at a chamber temperature of about 22 °C and a chamber humidity of about 4 % for about 120 minutes. Thereafter, the weight of the water in the sealed receptacle was measured when the temperature and humidity in the chamber were increased to about 50 °C and about 35 %, respectively, for about 40 minutes.

FIG. 6 is a graph of the weight % of the water in the sealed receptacle plotted as a function of time. The weight change for the water in the sealed receptacle measured at a chamber temperature of about 22 °C and humidity of about 4 % is denoted as **300.** The weight change for the water in the sealed receptacle measured at a chamber temperature of about 50 °C and humidity of about 35 % is denoted as **310.** FIG. 6 illustrates that at a chamber temperature of about 22 °C and humidity of about 4 %, the weight of the water in the receptacle decreased by about 0.25 % per minute. However, when the temperature and humidity were increased to about 50 °C and about 35 %, respectively, the weight of the water in the receptacle decreased by about 2.2 % per minute.

### Example 3

Several drops of water were placed in a stainless steel receptacle. A 0.32 mm thick film of cured GE Silicone RTV-615 was placed over a 4.25 mm diameter opening in a stainless steel receptacle lid. The stainless steel receptacle and the stainless steel receptacle lid (without a hole) were obtained from Perkin-Elmer Company and had the dimensions described in Example 1. The film of cured GE Silicone RTV-615 was obtained from General Electric Company.

A neoprene o-ring was placed on the film of cured GE Silicone RTV-615 in the receptacle lid. The neoprene o-ring was obtained from Perkin-Elmer Company and had the dimensions described in Example 1. The stainless steel receptacle lid was compressed onto the stainless steel receptacle as described in Example 1.

The sealed receptacle was placed in the Perkin-Elmer TGA-7, described in Example 1. The water in the sealed receptacle weighed about 61.043 mg. The humidity in the sealed receptacle was about 100 %.

The weight of the water in the sealed container was continuously measured at the temperatures and vapor pressure differences (*p*_{*1*}*-p*_{*2*}) listed in Table 1.

**Table 1**

| Temperature (°C) | Vapor Pressure Differences (*p*_{*1*}*-p*_{*2*})(mm Hg) | Permeability (g-cm/cm²-sec-mm Hg) |
|---|---|---|
| 23 | 21.1 | 5.1 x 10⁻¹⁰ |
| 39 | 52.4 | 7.5 x 10⁻¹⁰ |
| 48 | 83.7 | 9.8 x 10⁻¹⁰ |
| 57 | 129.8 | 11.4 x 10⁻¹⁰ |

FIG. 7 is a graph of the weight % of the water in the sealed receptacle plotted as a function of time. The weight changes for the water in the sealed receptacle measured at temperatures and vapor pressure differences of about 23 °C and 21.1 mm Hg, 48 °C and 83.7 mm Hg, 39 °C and 52.4 mm Hg, and 57 °C and 129.8 mm Hg are denoted as **400, 401, 402,** and **403,** respectively. Based on the weight changes in FIG. 7, the permeability of the 0.32 mm thick film of cured GE Silicone RTV-615 was calculated using equation (1). The permeability for each temperature and vapor pressure difference is listed in Table 1.

### Example 4

Several drops of water were placed in a stainless steel receptacle. A 0.00305 cm thick film of GE Lexan 141 polycarbonate was placed over a 4.18 mm diameter opening in a stainless steel receptacle lid. The stainless steel receptacle and the stainless steel receptacle lid (without a hole) were obtained from Perkin-Elmer Company and had the dimensions described in Example 1. The film of GE Lexan 141 polycarbonate was obtained from General Electric Company.

A neoprene o-ring was placed on the film of GE Lexan 141 polycarbonate in the receptacle lid. The neoprene o-ring was obtained from Perkin-Elmer Company and had the dimensions described in Example 1. The stainless steel receptacle lid was compressed onto the stainless steel receptacle as described in Example 1.

The sealed receptacle was placed in the Perkin-Elmer TGA-7, described in Example 1. The water in the sealed receptacle weighed about 53.185 mg. The humidity in the sealed receptacle was about 100 %.

The weight of the water in the sealed receptacle was continuously measured at a chamber temperature of about 22 °C and a chamber vapor pressure difference of about 21.1 mm Hg for about 275 minutes.

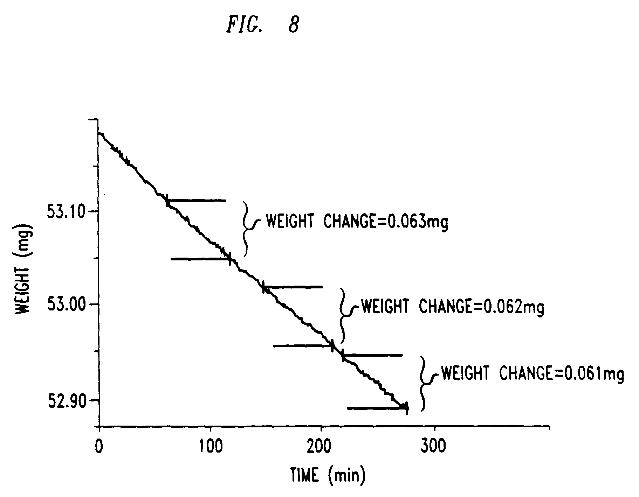

FIG. 8 is a graph of the weight change of the water in the sealed receptacle plotted as a function of time. FIG. 8 illustrates that at a chamber temperature of about 22 °C and vapor pressure difference of about 21.1 mm Hg, water vapor is transmitted through the GE Lexan 141 polycarbonate film at a rate of about 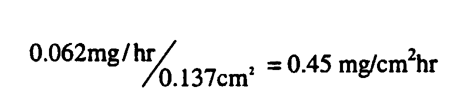 where 0.062 mg/hr is the weight change of water in the sealed receptacle per hour (from FIG. 8) and 0.137 cm² is the area of the opening in the lid of the receptacle (${\text{A = πr}}^{\text{2}}$, A= (3.14)(0.209 cm)² = 0.137 cm²). Based on this water vapor transmission rate, the film of GE Lexan 141 polycarbonate had a water permeability of about 2,250 x 10⁻¹⁰cm³-mm/cm²-sec-cm Hg (at STP).

## Claims

1. A method of determining the permeability of a material sheet using a thermogravimetric analyzer, comprising the steps of;
placing an amount of a material in a receptacle therefor, wherein the receptacle has sidewalls, and a bottom surface;
providing a receptacle lid, wherein the receptacle lid has sidewalls and a top surface, wherein the top surface has a hole therein;
placing a material sheet in the receptacle lid, wherein the material sheet covers the hole therein;
compressing the receptacle lid with the sheet of material therein onto the receptacle, wherein a portion of the sheet of material is positioned between the sidewalls of the receptacle and the sidewalls of the lid so as to form a seal therebetween;
placing the sealed receptacle in a thermogravimetric analyzer, and
determining the permeability of the material sheet by measuring a change in the weight of the sealed receptacle as a function of time, temperature, and vapor pressure.

2. The method of claim 1 wherein both the receptacle and the receptacle lid are made of a material selected from the group consisting of aluminum and steel.

3. The method of claim 1 further comprising the step of placing a deformable material in the receptacle lid around the perimeter of the material sheet prior to compressing the receptacle lid onto the receptacle.

4. The method of claim 3 wherein the deformable material is a material selected from the group consisting of rubber, silicone rubber, thermoplastic elastomers, thermosets, and hydrophobic materials.

5. The method of claim 3 wherein the deformable material is an o-ring.

6. The method of claim 1 wherein the top surface of the receptacle lid has an area less than about 1000 mm².

7. The method of claim 6 wherein the hole in the top surface of the receptacle lid has an area less than about 80 % of the area of the top surface of the lid.

8. The method of claim 1 wherein the material placed in the receptacle is selected from the group consisting of a solid, a liquid, and a gas.

9. A method of determining the vapor transmission rate through a material sheet using a thermogravimetric analyzer, comprising the steps of;
placing an amount of a material in a receptacle therefor, wherein the receptacle has sidewalls, and a bottom surface;
providing a receptacle lid, wherein the receptacle lid has sidewalls and a top surface, wherein the top surface has a hole therein;
placing a material sheet in the receptacle lid, wherein the material sheet covers the hole therein;
compressing the receptacle lid with the sheet of material therein onto the receptacle, wherein a portion of the sheet of material is positioned between the sidewalls of the receptacle and the sidewalls of the lid so as to form a seal therebetween;
placing the sealed receptacle in a thermogravimetric analyzer, and
determining the vapor transmission rate through the material sheet by measuring a change in the weight of the sealed receptacle as a function of time, temperature, and vapor pressure.
